# EUROPEAN PATENT APPLICATION

(11) **EP 4 835 152 A1**
(43) Date of publication of application: **04.11.2026**
(21) Application number: 24913630.0
(22) Date of filing: 19.12.2024
(51) Int. Cl.: C25B 11/031, C25B 11/081, C25B 11/085, C25B 1/04, C25B 9/00

(54) **ELECTRODE FOR WATER ELECTROLYSIS CELL, MANUFACTURING METHOD THEREOF, AND MEMBRANE-ELECTRODE ASSEMBLY FOR WATER ELECTROLYSIS CELL AND WATER ELECTROLYSIS CELL COMPRISING SAME**

(30) Priority: 29.12.2023 KR 20230197615; 16.12.2024 KR 20240187350
(71) Applicant: Kolon Industries, Inc., Seoul 07793 (KR)
(72) Inventor: LIM, Youngjoon, Seoul 07793 (KR); KIM, Jun Young, Seoul 07793 (KR); KIM, Jung Ho, Seoul 07793 (KR); LEE, Ju Sung, Seoul 07793 (KR); PARK, Hyun Jin, Seoul 07793 (KR)
(74) Representative: Vossius & Partner Patentanwälte Rechtsanwälte mbB
(86) International application number: PCT/KR2024/020755
(87) International publication number: WO 2025/143687

(57) **Abstract**

Provided is an electrode for a water electrolysis cell, the electrode comprising: a microporous layer; and a porous pattern layer positioned on one surface of the microporous layer. The porous pattern layer comprises: first patterns that extend in a first direction parallel to the one surface of the microporous layer and are arranged spaced apart in a second direction parallel to the one surface of the microporous layer and different from the first direction; and second patterns that extend in the second direction, are arranged spaced apart in the first direction, and intersect the first patterns, wherein the first patterns and the second patterns each include a plurality of stacked nanowires, and the nanowires include a metal oxide doped with fluorine.

## Description

### [Technical Field]

The present disclosure relates to an electrode for a water electrolysis cell and a manufacturing method thereof, and a membrane-electrode assembly for a water electrolysis cell and a water electrolysis cell including the same.

This research was supported by the Ministry of Trade, Industry and Energy (MOTIE) and the Korea Institute of Energy Technology Evaluation and Planning (KETEP). (Project Number: 20223030040220)

### [Background Art]

Recent energy demands and environments require sustainability, environmental friendliness, and high efficiency, and among them, hydrogen is drawing attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels. Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a Hydrogen Evolution Reaction (HER) occurring at a reduction electrode, and the other of which is an Oxygen Evolution Reaction (OER) occurring at an oxidation electrode.

A conventional electrode for a water electrolysis cell has a problem in that water electrolysis performance is affected by mass transfer resistance, Schottky contact, or the like, depending on a surface state of the electrode. In order to solve this problem, an additional layer is required, but research on a layer having electrochemical corrosion resistance and conductivity is still needed.

### [Disclosure]

### [Technical Problem]

Provided is an electrode for a water electrolysis cell that may exhibit high electrochemical durability and conductivity even in a water electrolysis operating environment of high voltage and low pH.

### [Technical Solution]

In one embodiment, provided is an electrode for a water electrolysis cell comprising: a microporous layer; and a porous pattern layer positioned on one surface of the microporous layer, wherein the porous pattern layer comprises first patterns extending in a first direction parallel to the one surface of the microporous layer and disposed spaced apart in a second direction parallel to the one surface of the microporous layer and different from the first direction, and second patterns extending in the second direction, disposed spaced apart in the first direction, and crossing the first patterns, the first patterns and the second patterns each comprise a plurality of stacked nanowires, and the nanowires comprise a fluorine-doped metal oxide.

In another embodiment, provided is a method of manufacturing an electrode for a water electrolysis cell comprising: (i) manufacturing nanowires comprising a metal oxide; (ii) spinning a solution in which the nanowires are dispersed onto a microporous layer to form a porous pattern layer comprising a plurality of first patterns extending in a first direction and disposed spaced apart in a second direction different from the first direction, and a plurality of second patterns extending in the second direction, disposed spaced apart in the first direction, and crossing the plurality of first patterns; (iii) bonding the porous pattern layer to the microporous layer to form a nanostructure; and (iv) mixing the nanostructure and a fluorine precursor, and then performing a heat treatment.

In another embodiment, provided is a membrane-electrode assembly for a water electrolysis cell comprising: a polymer electrolyte membrane; an oxygen evolution electrode positioned on one surface of the polymer electrolyte membrane and comprising the electrode for a water electrolysis cell; and a hydrogen evolution electrode positioned on the other surface of the polymer electrolyte membrane.

In another embodiment, provided is a water electrolysis cell comprising the membrane-electrode assembly for a water electrolysis cell.

### [Advantageous Effects]

An electrode for a water electrolysis cell according to an embodiment may exhibit high electrochemical durability and conductivity even in a water electrolysis operating environment of high voltage and low pH.

### [Brief Description Of The Drawings]

FIG. 1 is an exploded perspective view showing an electrode for a water electrolysis cell according to an embodiment.
FIGS. 2 and 3 are views showing a method of manufacturing an electrode for a water electrolysis cell according to an embodiment.
FIG. 4 is a diagram showing a corresponding equivalent circuit used for fitting of EIS obtained at 1.5 V and 1.9 V.
FIG. 5 is a diagram showing water electrolysis performance of a membrane-electrode assembly according to an embodiment.

### [Best Mode]

Hereinafter, specific embodiments will be described in detail so that those of ordinary skill in the art may easily practice them. However, the present invention may be embodied in many different forms and is not limited to the embodiments described herein.

The terms used herein are used only to describe exemplary embodiments, and are not intended to limit the present invention. A singular expression includes a plural expression unless the context clearly indicates otherwise.

The term "combination thereof" refers to a mixture, a laminate, a composite, a copolymer, an alloy, a blend, a reaction product, and the like of the constituents.

In the present specification, terms such as "include", "comprise", or "have" are intended to designate the presence of implemented features, numbers, steps, components, or a combination thereof, and it should be understood that they do not preclude the possibility of the presence or addition of one or more other features, numbers, steps, components, or a combination thereof.

In the drawings, thicknesses are exaggerated to clearly express various layers and regions, and similar portions are denoted by the same reference numerals throughout the specification. When a portion such as a layer, a membrane, a region, or a plate is referred to as being "on" or "above" another portion, it includes not only a case in which the portion is "directly on" another portion but also a case in which another portion is present therebetween. Conversely, when a portion is referred to as being "directly on" another portion, it means that no other portion is present therebetween.

A "layer" includes not only a shape formed on an entire surface but also a shape formed on a partial surface when observed in a plan view.

An average particle diameter may be measured by a method widely known to those skilled in the art, and for example, it may be measured by a particle size analyzer, or may be measured from a transmission electron microscope image or a scanning electron microscope image. Alternatively, an average particle diameter value may be obtained by measuring using a dynamic light scattering method, performing data analysis to count the number of particles for each particle size range, and calculating therefrom. Unless otherwise defined, the average particle diameter may mean a diameter (D₅₀) of particles having a cumulative volume of 50 vol% in a particle size distribution. In addition, unless otherwise defined, the average particle diameter may be obtained by measuring sizes (diameters or major axes lengths) of about 20 particles randomly from a scanning electron microscope image to obtain a particle size distribution, and taking a diameter (D₅₀) of particles having a cumulative volume of 50 volume% in the particle size distribution as the average particle diameter.

"Or" is not interpreted in an exclusive sense, and for example, "A or B" is interpreted as including A, B, A+B, and the like.

"Metal" is interpreted as a concept including common metals, transition metals, and metalloids (semi-metals).

### Electrode for a water electrolysis cell

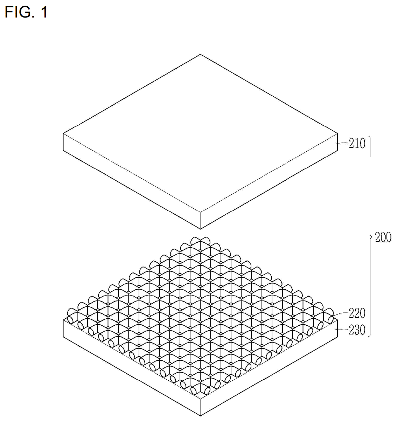

FIG. 1 is an exploded perspective view showing an electrode (200) for a water electrolysis cell according to an embodiment. Hereinafter, the electrode for a water electrolysis cell will be described with reference to FIG. 1.

### Microporous layer (230)

According to an embodiment, an electrode for a water electrolysis cell comprises a microporous layer, and the microporous layer may be one in which a plurality of fibers are integrated into a nonwoven fabric shape including a plurality of pores.

The microporous layer, generally also known by the term PTL (porous transport layer), is applied to a water electrolysis cell to transport water as a reactant to a polymer electrolyte membrane (PEM), while guiding products to move away from the PEM, and serves to collect and transport electrons generated by an electrochemical reaction. In order to maximize a function of the microporous layer, various physical properties such as corrosion resistance, electrical conductivity, diffusivity, and mechanical strength are required, and the microporous layer may include Ti, Ni, Zr, Hf, or a combination thereof.

A length of the fiber may be adjusted without limitation as long as it is within a range of an active area of the electrode for a water electrolysis cell. In addition, a diameter of the fiber may be 10 *µ*m to 70 *µ*m, for example, 12 *µ*m to 65 *µ*m, 13 *µ*m to 60 *µ*m, or 14 *µ*m to 50 *µ*m. When the fiber has the length and the diameter in the ranges, it may serve to efficiently collect and transport reacting substances or electrons in the water electrolysis cell.

According to an embodiment, a thickness of a microporous layer included in an electrode for a water electrolysis cell may be 100 *µ*m to 2,000 *µ*m, for example, 150 *µ*m to 500 *µ*m, 170 *µ*m to 290 *µ*m, or 200 *µ*m to 250 *µ*m. Here, a thickness of a coating layer may be measured through, for example, FIB, SEM, TEM, TOF-SIMS, XPS, or EDS analysis. When the thickness of the microporous layer is within the range, it may serve to efficiently collect and transport reacting substances or electrons in the water electrolysis cell.

According to an embodiment, a porosity of a microporous layer included in an electrode for a water electrolysis cell may be 30% to 90%, for example, 35% to 85%, 45% to 80%, or 50% to 80%. When the porosity of the microporous layer is within the range, it may serve to efficiently collect and transport reacting substances or electrons in the water electrolysis cell.

### Porous pattern layer (220)

According to an embodiment, an electrode for a water electrolysis cell comprises a microporous layer; and a porous pattern layer positioned on one surface of the microporous layer, wherein the porous pattern layer comprises first patterns extending in a first direction parallel to the one surface of the microporous layer and disposed spaced apart in a second direction parallel to the one surface of the microporous layer and different from the first direction, and second patterns extending in the second direction, disposed spaced apart in the first direction, and crossing the first patterns. In this case, the first pattern and the second pattern may each be provided in a plurality.

In one embodiment, the first direction may be parallel to an in-plane direction of one surface of the microporous layer, and the in-plane direction of one surface of the microporous layer may refer to a surface direction perpendicular to a thickness direction of one surface of the microporous layer. The second direction may be parallel to an in-plane direction of one surface of the catalyst layer, and the in-plane direction of one surface of the catalyst layer may refer to a surface direction perpendicular to a thickness direction of one surface of the catalyst layer. In this case, the second direction may be a direction **different** from the first direction, and as an example of the second direction, the second direction and the first direction may be perpendicular to each other.

An extension length of the first pattern in the first direction may be adjusted without limitation as long as it is within the range of the active area of the electrode for a water electrolysis cell. In addition, a width of the first pattern in the second direction may be 0.2 *µ*m to 5 *µ*m, and for example, may be 0.3 *µ*m to 3 *µ*m, 0.4 *µ*m to 2 *µ*m, or 0.5 *µ*m to 2 *µ*m. In addition, a separation distance of the first pattern in the second direction may be 0.5 *µ*m to 20 *µ*m, and for example, may be 1 *µ*m to 15 *µ*m, or 1.5 *µ*m to 8 *µ*m. In addition, a thickness of the first pattern in a third direction perpendicular to the one surface of the microporous layer may be 0.5 *µ*m to 10 *µ*m, and for example, may be 0.5 *µ*m to 7.5 *µ*m, 0.5 *µ*m to 5 *µ*m, or 0.5 *µ*m to 2.5 *µ*m. When the first pattern has the extension length, the width, the separation distance, and the thickness in the above ranges, it may facilitate desorption and discharge of oxygen generated during a water electrolysis reaction to lower mass transfer resistance, thereby having an advantage of reducing performance degradation at a high voltage.

An extension length of the second pattern in the second direction may be adjusted without limitation as long as it is within a range of an active area of the electrode for a water electrolysis cell. In addition, a width of the second pattern in the first direction may be 0.2 *µ*m to 5 *µ*m, and for example, may be 0.3 *µ*m to 3 *µ*m, 0.4 *µ*m to 2 *µ*m, or 0.5 *µ*m to 2 *µ*m. In addition, a separation distance of the second pattern in the first direction may be 0.5 *µ*m to 20 *µ*m, and for example, may be 1 *µ*m to 15 *µ*m, or 1.5 *µ*m to 10 *µ*m. In addition, a thickness of the second pattern in the third direction perpendicular to the one surface of the microporous layer may be 0.5 *µ*m to 10 *µ*m, and for example, may be 0.5 *µ*m to 7.5 *µ*m, 0.5 *µ*m to 5 *µ*m, or 0.5 *µ*m to 2.5 *µ*m. When the second pattern has the extension length, the width, the separation distance, and the thickness in the above ranges, it may facilitate desorption and discharge of oxygen generated during a water electrolysis reaction to lower mass transfer resistance, thereby having an advantage of reducing performance degradation at a high voltage.

One end of the first pattern may be connected to one end of another first pattern disposed spaced apart on one side in the second direction, and the other end of the first pattern may be connected to one end of still another first pattern disposed spaced apart on the other side in the second direction. In addition, one end of the second pattern may be connected to one end of another second pattern disposed spaced apart on one side in the first direction, and the other end of the second pattern may be connected to one end of still another second pattern disposed spaced apart on the other side in the first direction. That is, the first pattern may have a continuously cross-aligned shape. In addition, the second pattern may have a continuously cross-aligned shape. As a result, the porous pattern layer may have a mesh shape in which the plurality of first patterns and the plurality of second patterns cross each other.

According to an embodiment, a first pattern and a second pattern included in a porous pattern layer included in an electrode for a water electrolysis cell each comprise a plurality of stacked nanowires, and the nanowires comprise a fluorine-doped metal oxide.

The metal may include, for example, tungsten (W), titanium (Ti), nickel (Ni), ruthenium (Ru), tantalum (Ta), tin Sn, cobalt (Co), or a combination thereof. Accordingly, the metal oxide may include tungsten oxide, titanium oxide, nickel oxide, ruthenium oxide, tantalum oxide, tin oxide, cobalt oxide, or a combination thereof, and more specifically, may include tin oxide. In addition, the metal oxide is characterized by being doped with fluorine, and since the fluorine-doped metal oxide is included in the nanowires, a bonding force with the metal oxide is improved and an aspect ratio of the metal oxide is increased, thereby providing an advantage of preventing a doped material or a metal of the metal oxide from eluting in a water electrolysis operating environment and degrading membrane electrode performance, and improving durability.

In one embodiment, a content of fluorine may be 1 at% to 10 at%, and for example, may be 5 at% to 10 at%, or 8 at% to 10 at% based on 100 at% of a total of components measured by X-ray Photoelectron Spectroscopy (XPS) in the entire fluorine-doped metal oxide. When the content of fluorine in the entire fluorine-doped metal oxide satisfies the above range, fluorine may be uniformly doped, which may reduce a sheet resistance of the electrode and improve performance of the water electrolysis cell.

A length of the nanowire may be 1 *µ*m to 500 *µ*m, and for example, may be 3 *µ*m to 400 *µ*m, 5 *µ*m to 300 *µ*m, or 10 *µ*m to 100 *µ*m. In addition, a diameter of the nanowire may be 0.1 *µ*m to 1 *µ*m, and for example, may be 0.1 *µ*m to 0.9 *µ*m, or 0.2 *µ*m to 0.8 *µ*m. When the nanowire has the length and the diameter within the above ranges, electrical conductivity is improved due to networking of metal oxide particles, thereby having an advantage that contact resistance may be reduced.

According to an embodiment, a thickness of a porous pattern layer included in an electrode for a water electrolysis cell may be 0.5 *µ*m to 10 *µ*m, and for example, may be 1 *µ*m to 8 *µ*m, 1 *µ*m to 6 *µ*m, or 1 *µ*m to 4 *µ*m. Here, the thickness of the porous pattern layer may be measured through, for example, FIB, SEM, TEM, TOF-SIMS, XPS, or EDS analysis. When the thickness of the porous pattern layer is within the above range, desorption and discharge of oxygen generated during a water electrolysis reaction may be facilitated to lower mass transfer resistance, thereby having an advantage of reducing performance degradation at a high voltage.

According to an embodiment, a porosity of a porous pattern layer included in an electrode for a water electrolysis cell may be 30% to 95%, and for example, may be 35% to 90%, or 45% to 85%. When the porosity of the porous pattern layer is within the above range, desorption and discharge of oxygen generated during a water electrolysis reaction may be facilitated to lower mass transfer resistance, thereby having an advantage of reducing performance degradation at a high voltage.

### Catalyst layer (210)

According to an embodiment, an electrode for a water electrolysis cell may further comprise a catalyst layer positioned on one surface of the porous pattern layer and comprising active particles including a noble metal oxide and an ion conductor.

The noble metal may be a non-platinum based precious metal, and for example, the non-platinum based precious metal may include palladium (Pd), ruthenium (Ru), iridium Ir, alloys thereof, or combinations thereof. A noble metal oxide according to an embodiment may include IrOₓ (x is an integer of 1 to 3), RuOₓ (x is an integer of 1 to 3), PdOₓ (x is an integer of 1 to 3), IrMOₓ (M includes Ru, Sn, Ti, Te, Nb, or combinations thereof, and x is an integer of 1 to 3), or combinations thereof, and more specifically, may include IrOₓ (x is an integer of 1 to 3). When the noble metal oxide is included in the catalyst layer, there is an advantage that high catalytic activity may be exhibited.

The electrode for a water electrolysis cell may further comprise an ion conductor to improve adhesion of a catalyst and transfer hydrogen ions, and the ion conductor may comprise a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonyl fluoride group.

The ion conductor may be a fluorine-based ion conductor, a hydrocarbon-based ion conductor, or a mixture thereof. The fluorine-based ion conductor may be a fluorine-based polymer having the cation exchange group in a side chain and containing fluorine in a main chain, for example, poly(perfluorosulfonic acid), poly(perfluorocarboxylic acid), or the like. The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

The ion conductor according to an embodiment may have hydrogen ion conductivity. In the ion conductor having hydrogen ion conductivity, H in the cation exchange group at a side chain terminal may be substituted with Na, K, Li, Cs, or tetrabutylammonium. When substituting H with Na in the ion exchange group at the end of the side chain, NaOH is used for substitution during the preparation of a catalyst composition, when substituting with tetrabutylammonium, tetrabutylammonium hydroxide is used for substitution, and K, Li, or Cs may also be substituted using an appropriate compound. Since this substitution method is widely known in the art, a detailed description thereof will be omitted.

The ion conductor may be used in the form of a single substance or a mixture, and may also optionally be used together with a non-conductive compound for the purpose of further improving adhesion to a polymer electrolyte membrane. The content of the non-conductive compound may be appropriately adjusted according to the intended use. As the non-conductive compound, at least one selected from the group consisting of polytetrafluoroethylene (PTFE), tetrafluoroethylene-hexafluoropropylene copolymer (FEP), tetrafluoroethylene-perfluoroalkyl vinyl ether copolymer (PFA), ethylene/tetrafluoroethylene (ETFE), ethylenechlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

In one embodiment, based on 100 wt% of a total amount of the active particles including the noble metal oxide and the ion conductor, the active particles including the noble metal oxide may be included in an amount of 90 wt% to 99.5 wt%, for example, may be included in an amount of 91 wt% to 99 wt%, or 92 wt% to 98 wt%. In addition, based on 100 wt% of the total amount of the active particles including the noble metal oxide and the ion conductor, the ion conductor may be included in an amount of 0.5 wt% to 10 wt%, for example, may be included in an amount of 1 wt% to 9 wt%, or 2 wt% to 8 wt%. When the contents of the active particles including the noble metal oxide and the ion conductor are included in the above ranges, a catalyst including the same may form a conductive network to reduce sheet resistance of the electrode, and may improve performance of the water electrolysis cell.

### Method of manufacturing an electrode for a water electrolysis cell

A method of manufacturing an electrode for a water electrolysis cell according to an embodiment comprises (i) manufacturing nanowires comprising a metal oxide; (ii) spinning a solution in which the nanowires are dispersed onto a microporous layer to form a porous pattern layer comprising a plurality of first patterns extending in a first direction and disposed spaced apart in a second direction different from the first direction, and a plurality of second patterns extending in the second direction, disposed spaced apart in the first direction, and crossing the plurality of first patterns; (iii) bonding the porous pattern layer to the microporous layer to form a nanostructure; and (iv) mixing the nanostructure and a fluorine precursor, and then performing a heat treatment.

In one embodiment, the step (i) may be performed according to a manufacturing method such as a hydrothermal synthesis method, an electrospinning synthesis method, an electroplating method, and the like, and more specifically, may be performed according to an electrospinning synthesis method. More specifically, a spinning solution may be prepared by mixing a metal oxide precursor in a predetermined solvent, and the spinning solution may be electrospun onto a current collector plate and then subjected to a heat treatment to manufacture nanowires including a metal oxide.

The metal oxide precursor refers to a material in a preceding stage of the metal oxide. A type of the metal oxide may be tungsten oxide, titanium oxide, nickel oxide, ruthenium oxide, tantalum oxide, tin oxide, cobalt oxide, or a combination thereof, and preferably may be tin oxide (SnO₂). Accordingly, a type of the metal oxide precursor is not limited as long as it may produce SnO₂, which is a final product. For example, tin ethoxide, tin butoxide, tin isopropoxide, SnCl₂, SnCl₂·2H₂O, SnCl₂·5H₂O, Sn(OH)₄, or Sn(SO₄)₂ may be used as the metal oxide precursor, and more specifically, SnCl₂ may be used.

A type of the solvent is not limited as long as it may dissolve the metal oxide precursor. For example, the solvent may include water, an alcohol, dimethylformamide (DMF), or a combination thereof, and the alcohol may include methanol, ethanol, butanol, or isopropanol.

A solution in which the metal oxide precursor is mixed in the solvent may further include a dispersant, and the dispersant may include polyvinylpyrrolidone (PVP).

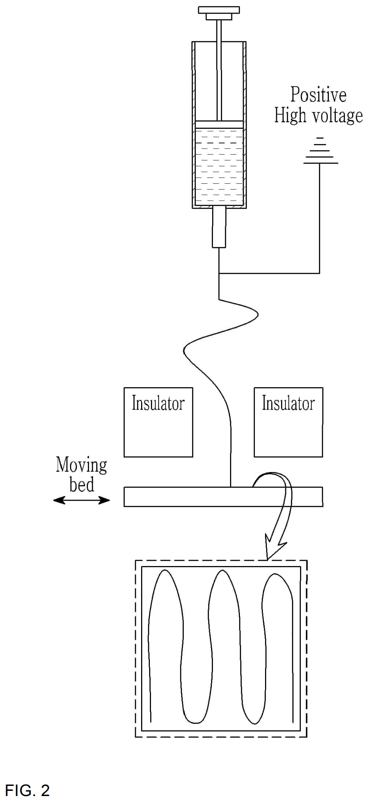

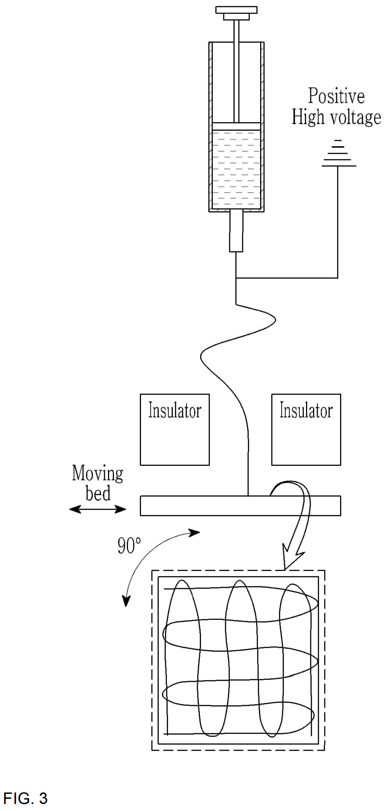

FIGS. 2 and 3 are diagrams showing a method for manufacturing an electrode for a water electrolysis cell according to an embodiment. As shown in FIG. 2, after spinning the solution in which the nanowire of step (ii) is dispersed onto the microporous layer to form a layer of the first pattern extending in the first direction and spaced apart in the second direction, as in FIG. 3, after rotating a current collector plate by 90° and forming a layer of the second pattern extending in the second direction and spaced apart in the first direction, the porous pattern layer may be manufactured by repeating the processes as in FIGS. 2 and 3 to sequentially stack the first pattern and the second pattern.

In one embodiment, in the step of spinning the solution in which the nanowire of step (ii) is dispersed onto the microporous layer, an extension length of the first pattern in the first direction may be adjusted without limitation as long **as it is within** a range of an active area of the electrode for a water electrolysis cell. In addition, a width of the first pattern in the second direction may be 0.2 *µ*m to 5 *µ*m, for example, 0.3 *µ*m to 3 *µ*m, 0.4 *µ*m to 2 *µ*m, or 0.5 *µ*m to 2 *µ*m. In addition, a separation distance of the first pattern in the second direction may be 0.5 *µ*m to 20 *µ*m, for example, 1 *µ*m to 15 *µ*m, or 1.5 *µ*m to 10 *µ*m. In addition, a thickness of the first pattern in a third direction perpendicular to the one surface of the microporous layer may be 0.5 *µ*m to 10 *µ*m, for example, 0.5 *µ*m to 7.5 *µ*m, 0.5 *µ*m to 5 *µ*m, or 0.5 *µ*m to 2.5 *µ*m.

An extension length of the second pattern in the second direction may be adjusted without limitation as long as it is within a range of an active area of the electrode for a water electrolysis cell. In addition, a width of the second pattern in the first direction may be 0.2 *µ*m to 5 *µ*m, for example, 0.3 *µ*m to 3 *µ*m, 0.4 *µ*m to 2 *µ*m , or 0.5 *µ*m to 2 *µ*m. In addition, a separation distance of the second pattern in the first direction may be 0.5 *µ*m to 20 *µ*m, for example, 1 *µ*m to 15 *µ*m, or 1.5 *µ*m to 10 *µ*m. In addition, a thickness of the second pattern in a third direction perpendicular to the one surface of the microporous layer may be 0.5 *µ*m to 10 *µ*m, for example, 0.5 *µ*m to 7.5 *µ*m, 0.5 *µ*m to 5 *µ*m, or 0.5 *µ*m to 2.5 *µ*m.

In one embodiment, in step (iii), a first heat treatment process may be performed to bond the porous pattern layer to the microporous layer. The first heat treatment may be performed in an air atmosphere, a first heat treatment temperature may be 400°C to 600°C, 410°C to 590°C, 420°C to 580°C, 430°C to 570°C, 440°C to 560°C, or 450°C to 550°C, and a first heat treatment time may be 4 hours to 8 hours, or 5 hours to 7 hours.

In one embodiment, a type of the fluorine precursor in the step (iv) may include at least one material selected from the group consisting of NH₄F and NH₄HF₂, and may preferably be NH₄F. At this time, a molar ratio of the nanostructure and the fluorine precursor may be 1:0.1 to 1:20, for example, may be 1:0.5 to 1:20, 1:1 to 1:20, 1:3 to 1:20, 1:8 to 1:20, 1:13 to 1:20, or 1:18 to 1:20. When the molar ratio of the nanostructure and the fluorine precursor is within the range, an amount of doped fluorine may be easily adjusted, making it possible to uniformly dope fluorine, thereby reducing a sheet resistance of the electrode and improving performance of the water electrolysis cell.

After mixing the nanostructure and the fluorine precursor, a second heat treatment process may be performed. The second heat treatment may be performed in an inert gas atmosphere, a second heat treatment temperature may be 80°C to 450°C, 100°C to 430°C, or 120°C to 400°C, and a second heat treatment time may be 4 hours to 8 hours, 4.5 hours to 7.5 hours, or 5 hours to 7 hours.

The fluorine precursor may be in a solid state, and the fluorine precursor in the solid state may be vaporized through the second heat treatment and doped into the nanowire including the metal oxide of one-dimensional structure. According to a general solution-based synthesis method, there is a problem that it is difficult to adjust a doping amount of fluorine, but when the fluorine precursor in a solid state is used, the doping amount of fluorine may be easily adjusted, and aggregation may be suppressed during a process of doping fluorine into the nanowire including the metal oxide, thereby synthesizing uniform particles.

### Membrane-electrode assembly for a water electrolysis cell

According to an embodiment, a membrane-electrode assembly for a water electrolysis cell comprises a polymer electrolyte membrane, an oxygen evolution electrode positioned on one surface of the polymer electrolyte membrane and comprising the electrode for a water electrolysis cell; and a hydrogen evolution electrode positioned on the other surface of the polymer electrolyte membrane.

Hereinafter, the oxygen evolution electrode, the hydrogen evolution electrode, and the polymer electrolyte membrane will be described in detail.

### Oxygen evolution electrode

The oxygen evolution electrode refers to an electrode where an Oxygen Evolution Reaction (OER) occurs, and the oxygen evolution electrode comprises the above-described electrode for a water electrolysis cell, and since the electrode for a water electrolysis cell has been described above, a detailed description thereof will be omitted.

### Hydrogen evolution electrode

The hydrogen evolution electrode refers to an electrode where a Hydrogen Evolution Reaction (HER) occurs, and the hydrogen evolution electrode may include a catalyst for a hydrogen evolution reaction. The catalyst for a hydrogen evolution reaction may comprise active particles and a support, the active particles may include a precious metal, and the noble metal may be a platinum-based precious metal.

Platinum (Pt) and/or a Pt-M alloy may be used as the platinum-based precious metal. The M may be palladium (Pd), ruthenium (Ru), iridium Ir, osmium (Os), gallium (Ga), titanium (Ti), vanadium V, chromium (Cr), manganese (Mn), iron (Fe), cobalt (Co), nickel (Ni), copper (Cu), silver (Ag), gold (Au), zinc (Zn), tin Sn, molybdenum (Mo), tungsten (W), lanthanum (La), or rhodium (Rh).

Specifically, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used as the Pt-M alloy.

The support may be a carbon-based support. The carbon-based support may be graphite, super P, carbon fiber, carbon sheet, carbon black, Ketjen Black, Denka black, acetylene black, carbon nano tube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The oxygen evolution electrode and the hydrogen evolution electrode may each comprise only a catalyst layer comprising a catalyst for an oxygen evolution reaction and a catalyst for a hydrogen evolution reaction, but may further comprise an electrode substrate together with the catalyst layer. In this case, the electrode substrate may serve to diffuse a fuel and an oxidant to the catalyst layer while serving to support the electrode. The electrode substrate is not particularly limited, and any known electrode substrate may be used. Specifically, the electrode substrate may be carbon paper, carbon cloth, carbon felt, or metal cloth (referring to a porous film constituted by a metal cloth in a fibrous state or a metal film formed on a surface of a cloth formed of polymer fibers) that may be used as a conductive substrate. As the electrode substrate, one treated to be water-repellent with a fluorine-based resin may be used, and in this case, it may prevent reactant diffusion efficiency from being reduced by water generated during operation of the water electrolysis cell. As the fluorine-based resin, polytetrafluoroethylene, polyvinylidene fluoride, polyhexafluoropropylene, polyperfluoroalkyl vinyl ether, polyperfluorosulfonyl fluoride, alkoxyvinyl ether, fluorinated ethylene propylene, polychlorotrifluoroethylene, or a copolymer thereof may be used.

### Polymer electrolyte membrane

The polymer electrolyte membrane has an ion exchange function of transporting hydrogen ions generated in the oxygen evolution electrode to the catalyst for a hydrogen evolution reaction. A polymer electrolyte membrane according to an embodiment may include a porous support including a plurality of pores, and an ion conductor filling the pores of the porous support.

The porous support may be a fluorine-based support or a nanoweb support. The fluorine-based support may correspond to, for example, expanded polytetrafluoroethylene (e-PTFE) having a microstructure of polymer fibrils, or a microstructure in which nodes are connected to each other by fibrils. In addition, a film having a microstructure of polymer fibrils in which the nodes do not exist may also be used as the porous support.

The fluorine-based support may include a perfluorinated polymer. The porous support may be formed by extruding dispersion polymerized PTFE into a tape shape in the presence of a lubricant and stretching a material obtained thereby to result in a more porous and stronger porous support. In addition, an amorphous content of the PTFE may be increased by heat-treating the e-PTFE at a temperature exceeding a melting point (about 342°C) of the PTFE. The e-PTFE film manufactured by the method may have micropores having various diameters and a porosity. The e-PTFE film manufactured by the method may have a porosity of at least 35%, and a diameter of the micropores may be about 0.01 to 1 *µ*m (micrometers).

The nanoweb support may be a non-woven fibrous web consisting of a plurality of randomly oriented fibers. The non-woven fibrous web refers to a sheet having a structure of individual fibers or filaments that are interlaid, but not in the same manner as a woven cloth. The non-woven fibrous web may be manufactured by carding, garneting, air-laying, wet-laying, melt blowing, spun bonding, or stitch bonding.

The fibers may comprise one or more polymer materials, and any material generally used as a fiber-forming polymer material may be used, and specifically, a hydrocarbon-based fiber-forming polymer material may be used. For example, the fiber-forming polymer material may include polyolefins such as polybutylene, polypropylene, and polyethylene, polyesters such as polyethylene terephthalate and polybutylene terephthalate, polyamides (nylon-6 and nylon-6,6), polyurethane, polybutene, polylactic acid, polyvinyl alcohol, polyphenylene sulfide, polysulfone, liquid crystalline polymers, polyethylene-co-vinyl acetate, polyacrylonitrile, cyclic polyolefins, polyoxymethylene, polyolefin-based thermoplastic elastomers, or a combination thereof.

The nanoweb support may be a support in which nanofibers are integrated into a non-woven fabric form including a plurality of pores.

As the nanofiber, a hydrocarbon-based polymer exhibiting excellent chemical resistance and having hydrophobicity so that there is no concern of shape deformation due to moisture in a high-humidity environment may be preferably used. Specifically, as the hydrocarbon-based polymer, nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, a copolymer thereof, or a mixture thereof may be used.

The nanoweb support is an aggregate of nanofibers in which nanofibers manufactured by electrospinning are randomly arranged. In this case, the nanofiber may have an average diameter of 40 nm to 5000 nm, when calculated from an average of 50 fiber diameters measured using a scanning electron microscope (Scanning Electron Microscope, JSM6700F, JEOL) in consideration of a porosity and a thickness of the nanoweb. When the average diameter of the nanofibers is within the above range, mechanical strength may be excellent, and an appropriate porosity may be secured.

A thickness of the non-woven fibrous web may be 10 *µ*m to 50 *µ*m or 15 *µ*m to 43 *µ*m. When the thickness of the non-woven fibrous web is within the above range, mechanical strength, weight reduction, and integration may be excellent. The non-woven fibrous web may have a basic weight of 5 to 30 mg/cm². When the basis weight of the non-woven fibrous web is less than the numerical range, visible pores may be formed, and thus it may be difficult to function as a porous support, and when the basic weight is greater than the numerical range, it may be manufactured like a form of paper or a woven cloth in which pores are hardly formed. The porosity may be calculated by a ratio of an air volume in the porous support to a total volume of the porous support according to Equation 1 below. At this time, the total volume may be calculated by preparing a rectangular-shaped sample and measuring a width, a length, and a thickness, and the air volume may be obtained by measuring a mass of the sample and then subtracting a polymer volume inversely calculated from a density from the total volume. [Equation 1] 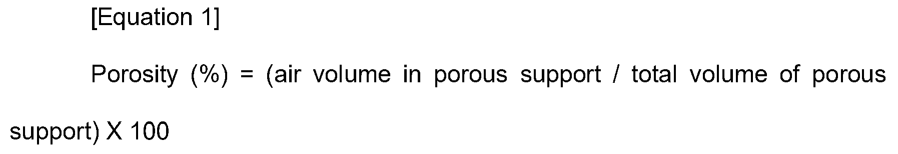 Porosity (%) = (air volume in porous support / total volume of porous support) X 100

For example, the porosity of the porous support may correspond to 30% to 90%. When the porosity of the porous support is within the range, a problem of deterioration of impregnability of the ion conductor or a problem in which a post-process does not proceed smoothly due to deterioration of stability may not occur.

The ion conductor is the same as described above. The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### Water electrolysis cell

In one embodiment, a water electrolysis cell comprises the membrane-electrode assembly for a water electrolysis cell.

Since the water electrolysis cell is the same as a known one except for comprising the membrane-electrode assembly according to an present application, a detailed description thereof will be omitted.

### [Mode for Invention]

Hereinafter, Examples and Comparative Examples of the present invention are described. The following Examples are only examples of the present invention, and the present invention is not limited to the following Examples.

### Example 1

### 1. Preparation of a microporous layer

As the microporous layer, a titanium microporous layer (PTL (Porous Transfer layer)) from BEKART was used, and a porous pattern layer was prepared on a 2GDL09N product having a thickness of 250 *µ*m, a weight of 450 g/m², and a porosity of 60%.

### 2. Preparation of a porous pattern layer

After 0.5 g of SnCl₂ was added to 4 g of a solution in which dimethylformamide (DMF) and ethanol were mixed at a weight ratio of 1:1, the mixture was uniformly mixed for 30 minutes, and 0.5 g of polyvinylpyrrolidone (PVP) was additionally mixed to prepare a spinning solution. After injecting the spinning solution into a syringe, the solution was spun onto the microporous layer (230) at a flow rate of 1.2 ml/hr and a voltage of 12 kV using a syringe pump to manufacture a nonwoven membrane. As shown in FIG. 2, a first pattern was formed on the microporous layer (230) on a moving bed moving at a constant speed. The first pattern had a width of 1 *µ*m in the second direction, a separation distance of the first pattern in the second direction was 10 *µ*m, and a porous pattern layer having a thickness of 1 *µ*m was manufactured. After spinning the first pattern, as shown in FIG. 3, the moving bed was rotated by 90° and then moved at a constant speed to form a second pattern. The second pattern had a width of 1 *µ*m in the second direction, a separation distance of the first pattern in the second direction was 10 *µ*m, and a thickness is 1 *µ*m. The microporous layer (230) and the porous pattern layer formed on the microporous layer were heat-treated at 500°C for 6 hours in an air atmosphere.

After mixing the manufactured porous pattern layer including SnO₂ nanowires with NH₄F as a fluorine precursor, the mixture was heat-treated at a temperature of 400°C for 6 hours in an inert gas atmosphere, washed using ethanol and distilled water, and dried at a temperature of 60°C for 12 hours to manufacture a porous pattern layer including fluorine-doped SnO₂ nanowires.

### 3. Preparation of catalyst layer

An IrOₓ catalyst and an ionomer solution were mixed such that an ionomer/catalyst ratio was 0.3, dispersed, and stirred for 24 hours to manufacture a catalyst composition for an oxygen evolution reaction. The catalyst composition for an oxygen evolution reaction is referred to as a first catalyst composition. The first catalyst composition was thinly applied onto a transfer substrate by spray, decal, or ultrasonic spray coating to manufacture a catalyst layer, and the catalyst layer is referred to as a first electrode layer.

### 4. Manufacture of Membrane-Electrode Assembly for Water Electrolysis

A catalyst having a content of platinum particles of 46 wt% on a graphitized support and an ionomer solution were mixed such that an ionomer/carbon ratio was 1.0 to manufacture a second catalyst composition. After applying the second catalyst composition onto a transfer substrate to manufacture a second electrode layer, the first electrode layer including the porous pattern layer was attached to one side of a polymer electrolyte membrane, and the second electrode layer was attached to the opposite side and bonded together to manufacture a membrane-electrode assembly.

### Example 2

A membrane-electrode assembly for a water electrolysis cell was manufactured in substantially the same manner as in Example 1, except that a thickness of the porous pattern layer was designed to be 10 *µ*m in the manufacture of the porous pattern layer.

### Example 3

A membrane-electrode assembly for a water electrolysis cell was manufactured in substantially the same manner as in Example 1, except that a separation distance of the porous pattern layer was designed to be 5 *µ*m in the manufacture of the porous pattern layer.

### Comparative Example 1

A membrane-electrode assembly for a water electrolysis cell was manufactured in substantially the same manner as in Example 1, except that a porous pattern layer was not manufactured in Example 1.

### Comparative Example 2

In the manufacture of the nanowires, a membrane-electrode assembly for a water electrolysis cell was manufactured in substantially the same manner as in Example 1, except that fluorine doping was not performed on the SnO₂ nanowires.

### Evaluation Example 1: Impedance Analysis

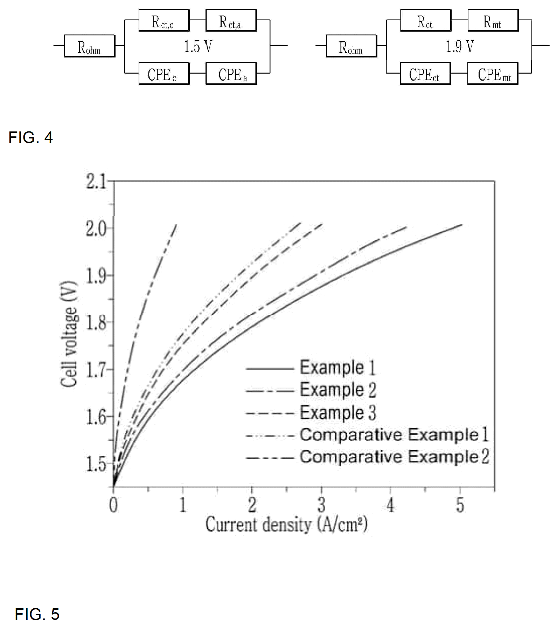

While applying a flow rate of 5 ml/min at 80°C, an impedance analysis was performed by EIS fitting with the equivalent circuit of FIG. 4 in a frequency range from 50 kHz to 50 mHz at applied voltages of 1.5 V and 1.9 V. A resistance component in a high frequency region (High Frequency Resistance; HFR) was measured and evaluated, and the results are shown in Table 1. The resistance component in the high frequency region is a factor indicating contact resistance, and a larger value thereof indicates that an interface between components is fractured and contact becomes poor.

Additionally, an impedance analysis was performed by EIS fitting with the equivalent circuit of FIG. 2 in a frequency range from 50 kHz to 50 mHz at 1.9 V, and the results are shown in Table 1. At this time, R_{ct} represents charge transfer resistance by the water electrolysis reaction, and Rₘₜ represents mass transfer resistance of an oxygen gas product generated by the water electrolysis reaction, and larger values thereof mean that they act as resistance to affect water electrolysis performance, thereby causing performance degradation.

**[Table 1]**

| | HFR (mΩ·cm²) | R_{ct} (mΩ·cm²) | Rₘₜ (mΩ·cm²) |
|---|---|---|---|
| Example 1 | 70.1 | 14.2 | 12.5 |
| Example 2 | 131.8 | 18.1 | 15.1 |
| Example 3 | 125.3 | 15.1 | 16.8 |
| Comparative Example 1 | 142.5 | 19.8 | 17.9 |
| Comparative Example 2 | 257.5 | 45.6 | 24.3 |

Referring to Table 1, compared to Comparative Example 1 using a general electrode or Comparative Example 2 in which HFR was significantly increased because it was constituted by only fluorine-undoped tin oxide (SnO₂) and thus did not have electrical conductivity, it can be seen that when an electrode according to an embodiment is used, the HFR is decreased, thereby effectively reducing the contact resistance of the electrode interface.

Additionally, compared to Example 2 in which the thickness of the porous pattern layer was increased, in the case of Example 1 in which the thickness of the porous pattern layer was optimized, the HFR showed a minimum, and thus it can be seen that the contact resistance of the electrode interface was effectively reduced.

In addition, the Rₘₜ value of Example 1 was the smallest, and through this, it may be seen that the movement of the generated oxygen gas was facilitated, thereby showing a reduction effect of Rₘₜ. When a product generated in water electrolysis is an oxygen gas, as the generated amount increases, bubbles may become larger and interfere with the water electrolysis reaction, thereby causing performance degradation. Since good performance is maintained by continuously performing the reaction when oxygen gas is quickly discharged, the mass transfer of the oxygen gas may be indirectly confirmed through a resistance analysis of impedance, and it may be seen that oxygen discharge is facilitated by a decrease in Rₘₜ.

### Evaluation Example 2: Performance Evaluation

While applying a flow rate of 5 ml/min at 80°C, the performance was evaluated by measuring current and resistance at specific voltages from 1.4 V to 2 V, and the results are shown in FIG. 5.

Referring to FIG. 5, compared to Comparative Example 1 using a general electrode or Comparative Example 2 in which water electrolysis performance was reduced because it consisted of only fluorine-undoped tin oxide (SnO₂) and thus did not have electrical conductivity, it may be seen that when the electrode according to an embodiment is used, ohmic resistance may be lowered by reducing contact resistance at an interface between the electrode and the microporous layer, and water electrolysis performance is improved by reducing tortuosity of an oxygen movement path in the pattern layer to mitigate performance degradation. In addition, through Example 2 and Example 3, it may be seen that performance is decreased depending on the thickness and the separation distance of the porous pattern layer, and it may be seen that the performance is decreased when the separation distance is narrow.

Although preferred embodiments have been described in detail above, the scope of the present invention is not limited thereto, and various modifications and improvements made by those skilled in the art using the basic concept defined in the following claims also fall within the scope of the present invention.

## Claims

1. An electrode for a water electrolysis cell comprising:
a microporous layer; and
a porous pattern layer positioned on one surface of the microporous layer,
wherein the porous pattern layer comprises first patterns extending in a first direction parallel to the one surface of the microporous layer and disposed spaced apart in a second direction parallel to the one surface of the microporous layer and different from the first direction, and second patterns extending in the second direction, disposed spaced apart in the first direction, and crossing the first patterns,
the first patterns and the second patterns each comprise a plurality of stacked nanowires, and
the nanowires comprise a fluorine-doped metal oxide.

2. The electrode for a water electrolysis cell of claim 1,
wherein the first pattern and the second pattern are each provided in a plurality.

3. The electrode for a water electrolysis cell of claim 1,
wherein a width of the first pattern in the second direction is 0.2 *µ*m to 5 *µ*m a separation distance of the first pattern in the second direction is 0.5 *µ*m to 20 *µ*m, and
a thickness of the first pattern in a third direction perpendicular to one surface of the microporous layer is 0.5 *µ*m to 10 *µ*m.

4. The electrode for a water electrolysis cell of claim 1,
wherein a width of the second pattern in the first direction is 0.2 *µ*m to 5 *µ*m
a separation distance of the second pattern in the first direction is 0.5 *µ*m to 20 *µ*m, and
a thickness of the second pattern in a third direction perpendicular to one surface of the microporous layer is 0.5 *µ*m to 10 *µ*m.

5. The electrode for a water electrolysis cell of claim 1,
wherein one end of the first pattern is connected to one end of another first pattern disposed spaced apart on one side in the second direction, and
the other end of the first pattern is connected to one end of still another first pattern disposed spaced apart on the other side in the second direction.

6. The electrode for a water electrolysis cell of claim 2,
wherein the porous pattern layer has a mesh shape in which the plurality of first patterns and the plurality of second patterns cross each other.

7. The electrode for a water electrolysis cell of claim 1,
wherein a content of fluorine is 1 at% to 10 at% based on 100 at% of a total of components measured by X-ray Photoelectron Spectroscopy (XPS) in the entire fluorine-doped metal oxide.

8. The electrode for a water electrolysis cell of claim 1,
wherein a length of the nanowire is 1 *µ*m to 500 *µ*m, and
a diameter of the nanowire is 0.1 *µ*m to 1 *µ*m.

9. The electrode for a water electrolysis cell of claim 1,
wherein a thickness of the porous pattern layer is 0.5 *µ*m to 10 *µ*m.

10. The electrode for a water electrolysis cell of claim 1,
wherein a porosity of the porous pattern layer is 50% to 80%.

11. The electrode for a water electrolysis cell of claim 1,
wherein the electrode for a water electrolysis cell further comprises a catalyst layer positioned on one surface of the porous pattern layer and comprising active particles including a noble metal oxide and an ion conductor.

12. A method of manufacturing an electrode for a water electrolysis cell, comprising:
(i) manufacturing nanowires comprising a metal oxide;
(ii) spinning a solution in which the nanowires are dispersed onto a microporous layer to form a porous pattern layer comprising a plurality of first patterns extending in a first direction and disposed spaced apart in a second direction different from the first direction, and a plurality of second patterns extending in the second direction, disposed spaced apart in the first direction, and crossing the plurality of first patterns;
(iii) bonding the porous pattern layer to the microporous layer to form a nanostructure; and
(iv) mixing the nanostructure and a fluorine precursor, and then performing a heat treatment.

13. A membrane-electrode assembly for a water electrolysis cell comprising:
a polymer electrolyte membrane;
an oxygen evolution electrode positioned on one surface of the polymer electrolyte membrane and including the electrode for a water electrolysis cell according to claim 1; and
a hydrogen evolution electrode positioned on the other surface of the polymer electrolyte membrane.

14. A water electrolysis cell comprising the membrane-electrode assembly for a water electrolysis cell according to claim 13.
